# EUROPÄISCHE PATENTANMELDUNG

(11) **EP 0 761 485 A1**
(43) Veröffentlichungstag der Anmeldung: **12.03.1997**
(21) Anmeldenummer: 96112330.4
(22) Anmeldetag: 31.07.1996
(51) Int. Cl.: B60J 10/02

(54) **Dichtungsprofilleiste für eine Fensterverglasung**

(30) Priorität: 28.08.1995 CH 2439/95
(71) Anmelder: DÄTWYLER AG Schweizerische Kabel- Gummi- und Kunststoffwerke, CH-6460 Altdorf (CH)
(72) Erfinder: Herwegh, Norbert, 6467 Schattdorf (CH)
(74) Vertreter: Siebert, Rolf, Dipl.-Masch.Ing.ETH

(57) **Zusammenfassung**

Die Dichtungsprofilleiste weist innerhalb eines in ihrem Dichtungskörper (6) angeordneten Füllerkanals (17) einen Füller (27) auf, der mit Hohlräumen (28) versehen ist. Dadurch lässt er sich stark komprimieren und kann daher grosse Toleranzen in der Dichtungsprofilleiste, in der Verglasung (2) und im Rahmen (1) überbrücken. Zwei Dichtlippen (30, 31) sind direkt am Füller (27) angebracht, von denen die eine (30) die Verglasung (2) an deren Rand überlappt. Sie muss jedoch keine an der Verglasung auftretenden Kräfte übertragen, denn diese werden von zwei Verzahnungen (15, 16) aufgenommen. Die eine (15) befindet sich an einem zungenartigen Lappen (14), der die Toleranzen ebenfalls aufnehmen kann. Ein Einschnitt (13) neben dem Lappen (14) sorgt dafür, dass die von der einen Verzahnung (15) aufgenommenen Kräfte gleichmässig in den ganzen Dichtungskörper (6) verteilt und in den Rahmen (1) weitergeleitet werden.

## Beschreibung

Die Erfindung betrifft eine Dichtungsprofilleiste aus elastischem Material für eine Fensterverglasung in einem Rahmen insbesondere eines Fahrzeuges, mit einem Profilleistenkörper, der einen Füllerkanal, einen in diesen eingesetzten Füller zur Erzielung eines auf den Rahmen und die Verglasung einwirkenden Dichtdruckes, ferner die Aussenseite des Rahmens sowie den Rand der Verglasung zu übergreifen und solcherarts abzudichten bestimmte Dichtlippen und im weiteren eine Verankerungslippe aufweist, die zur Verankerung der Profilleiste am Rahmen bestimmt ist.

Von den Herstellern von Fahrzeugen aller Art wird heutzutage verlangt, die durch den Fahrtwind erzeugten Geräusche möglichst gering zu halten. Auch soll wegen der optischen Wirkung auf den Betrachter eine möglichst flächenbündige Konstruktion erzielt werden, d.h. die Verglasung soll so gut als möglich mit dem sie umgebenden Rahmen in einer Ebene liegen. Dabei sollen weder tragende noch dichtende Elemente sichtbar sein. Wenn dies jedoch aus dichtungstechnischen oder konstruktiven Gründen sich nicht vermeiden lässt, sollen diese Elemente den Rahmen und die Verglasung nur um das unbedingt Notwendige überlappen; der sog. Ueberstand soll also so klein wie möglich und mit fliessenden Konturen, also möglichst dünn auslaufend, angeordnet sein.

Eine Dichtungsprofilleiste der eingangs erwähnten Art, die diesen Anforderungen gerecht zu werden versucht, ist bereits bekannt geworden. Hierbei zeigt jene Profilleiste einen im wesentlichen H-förmigen Querschnitt. Die eine Oeffnung dieses H-Profils ist sehr schmal, praktisch schlitzförmig; mit ihr wird die Profilleiste auf eine entsprechend geformte Rippe des Rahmens aufgesteckt. Die auf der anderen Seite des Quersteges des H-Profils liegende Oeffnung nimmt die Verglasung, in der Regel eine Doppelverglasung aus zwei im Abstand voneinander gehaltenen Scheiben, auf. Durch einen erhöhten Anschlag an derjenigen Seite der Profilleiste, die zur Innenseite wird, kann der von der Aussenseite her auf die Verglasung wirkende Druck relativ gut in den Rahmen eingeleitet werden, während Sogkräfte, welche die Verglasung nach aussen zu ziehen versuchen, durch eine kräftige Verankerungslippe, welche eine speziell dafür vorgesehene Halterippe im Rahmen umgreift, aufgenommen werden.

In diesem Zusammenhang müssen kurz die Forderungen erwähnt werden, die an eine Dichtungsprofilleiste dieser Art zu stellen sind. Sie muss erstens in der Lage sein, Druckkräfte, welche von aussen her auf die Verglasung einwirken, ohne grössere eigene Beanspruchung in den die Verglasung umgebenden Rahmen einzuleiten. Zweitens müssen Kräfte in der Gegenrichtung, vor allem Sogkräfte, aber auch Drücke, wie sie z.B. durch das Anlehnen an die Verglasung oder sogar durch Krafteinwirkung von Hand absichtlich entstehen, ebenfalls derart gut übertragen werden, dass sich die Verglasung nicht aus ihrer Halterung in der Profilleiste löst. Drittens müssen diese Forderungen auch dann erfüllt sein, wenn in den Abmessungen des Rahmens, der Profilleiste selber und der Verglasung Abweichungen von den Sollmassen auftreten. Diese Toleranzen, die ohne weiteres bis zu 2 mm und mehr ausmachen können, müssen aufgenommen werden, ohne dass dabei eine Schwächung in der Halterung der Verglasung auftritt. Eine vierte Forderung, nämlich dass der Ueberstand der Profilleiste über die Verglasung so klein wie möglich sein soll, wurde bereits erwähnt.

Die Profilleiste nach dem Stand der Technik ist dazu nur ungenügend in der Lage. Namentlich ständig variierende Sogkräfte, die zu einem Rütteln der Verglasung führen, können bewirken, dass sich die weiter oben erwähnte Verankerungslippe langsam, aber stetig von der von ihr eingefassten Halterippe abgleitet. Die Kraftübertragung von der Verglasung in den Rahmen hinein und umgekehrt ist nicht ausreichend gelöst, sodass die Verankerung der Profilleiste dieses langsame Herausarbeiten nicht ausreichend verhindern kann. Vor allem aber ist die Aufnahme und der Ausgleich von Toleranzen unzureichend. Zwar weist jene Profilleiste einen Kanal auf, in welchen nach ihrer Montage im Rahmen und in der Verglasung ein Füllstreifen, der sog. Füller, eingesetzt wird, der Druck auf die beiden Wände des Kanals ausüben und damit die notwendige Vorspannung in der elastischen Profilleiste zur sicheren Halterung und Abdichtung der Verglasung erzeugen soll. Dieser Füller ist aber ein Vollgummistreifen; er kann also kaum nachgeben und ist daher nicht in der Lage, die Toleranzen aufzunehmen. Namentlich nimmt die Vorspannung unzulässig ab, wenn die Abmessungen der Verglasung und/oder der Profilleiste zu klein und diejenigen der Rahmenöffnung zu gross sind.

In diesem Zusammenhang soll kurz darauf hingewiesen werden, dass im folgenden mit dem Begriff "Rahmen" stets der die Verglasung umgebende Teil einer Wand , also z.B. einer Fahrzeugwand bezeichnet werden soll. Der Begriff "Verglasung" wurde bereits weiter oben erläutert.

Die Erfindung bezweckt nun, die geschilderten Nachteile des Standes der Technik zu umgehen und den erwähnten Forderungen voll zu entsprechen.

Eine Dichtungsprofilleiste der eingangs erwähnten Art, die diesem Zweck entspricht, ist erfindungsgemäss durch die Merkmale des Anspruches 1 gekennzeichnet.

Zwei Ausführungsbeispiele der erfindungsgemässen Dichtungsprofilleiste sind in den beiliegenden Zeichungen dargestellt; es zeigen:
- Fig. 1: im Querschnitt eine erste Ausführungsform, die einem Rahmen angepasst ist, der Profilleisten der bisher bekannten Art aufnehmen muss, und
- Fig. 2: eine zweite Ausführungsform, die ausschliesslich auf die erwähnten Forderungen entwickelt ist, und bei der der Rahmen an sie angepasst ist.

In beiden Figuren ist die linke Seite jeweils die Innenseite und die rechte Seite die Aussenseite eines Fahrzeuges.

Mit 1 ist ein Rahmen bezeichnet, mit 2 eine Verglasung, die in eine Oeffnung des Rahmens 1 eingesetzt ist. Der Rahmen 1 ist hier als einfaches Profil dargestellt. Er weist auf der Innenseite eine Halterippe 3 und in der Mitte eines Quersteges 4 eine Mittelrippe 5 auf, die hauptsächlich zur Positionierung der Profilleiste bei deren Aufsetzen auf den Rahmen 1 dient. Mit 6 ist der Hauptteil der Profilleiste, der Dichtungskörper, bezeichnet. Die Verglasung 2 besteht wie üblich aus zwei parallel zueinander angeordneten Scheiben 7i, 7a, die durch einen Distanzhalter 8 im Abstand voneinander gehalten sind. Dieser sowie die Stirnseiten der beiden Scheiben 7i, 7a, sind von einem aufgeklebten Dichtungsstreifen 9 eingefasst, der um die ganze Verglasung 2 herumläuft und das Eindringen von Feuchtigkeit in den Zwischenraum zwischen den beiden Scheiben verhindert. Ferner dient er auch als sog. Kantenschutz beim Transport der Verglasung. Auf die Querschnittsform dieses Dichtungsstreifens 9 wird noch zurückgekommen.

Der Dichtungskörper 6 weist eine Verankerungslippe 10 auf, welche um die Halterippe 3 herumgreift und hauptsächlich dazu dient, ein Wegziehen der Profilleiste unter Wirkung von Sogkräften ander Aussenseite nach rechts in der Figur zu verhindern. Ihr gegenüber ist eine Dichtlippe 11 angeordnet, welche gegen die innere Scheibe 7i anliegt. Beide Lippen 10, 11 sind durch eine gemeinsame Wurzel 12 miteinander verbunden, die sich in beiden Figuren nach unten erstreckt. Die Dichtlippe 11, die beim genannten Wegziehen noch stärker an die Scheibe 7i gepresst wird, unterstützt dadurch die Verankerungsfunktion der Lippe 10. Die Wurzel 12 endet an einem tiefen, aber schmalen Einschnitt 13. Auf diesen folgt ein langer, sich nach rechts erstreckender zungenartiger Lappen 14, der wegen seiner noch zu erläuternden Funktion als Zuganker bezeichnet werden soll. Er weist auf seiner einen Längeseite 14a eine Verzahnung 15 auf. Der Dichtungsstreifen 9 ist mit einer in ihn integrierten Gegenverzahnung 16 versehen, die mit der Verzahnung 15 zusammenwirkt. Dadurch wird die Verglasung 2 mit dem Dichtungskörper 6 kraftschlüssig verbunden.

Zu beachten ist, dass der Zuganker 14 relativ dünn, aber wie erwähnt lang ist, wobei seine Länge durch den Einschnitt 13 und einen noch näher darzustellenden Füllerkanal 17 vergrössert ist. Da der Zuganker 14 wie der Dichtungskörper 6 aus elastischem Material besteht, kann er notfalls in die Länge gezogen werden, damit seine Verzahnung auch bei Abweichungen von den Solimassen auf alle Fälle in die Verzahnung 16 eingreift. Der Einschnitt 13 sorgt dafür, dass die dabei im Zuganker 14 auftretenden Zugkräfte (daher sein Name), aber vor allem auch Sogkräfte an der Aussenseite, die durch Unterdruck entstehen, nicht hauptsächlich von der Wurzel 12 aufgenommen werden müssen. Dies würde nämlich zu übermässigen Zug- und Biegespannungen an der Verankerungslippe 10 führen und diese daher um das obere Ende der Halterippe 3 herum ziehen, wie dies beim erwähnten Stand der Technik der Fall sein kann. Vielmehr wird durch den Einschnitt 13 erreicht, dass diese Kräfte einigermassen gleichmässig auf die Wurzel 12 als auch über einen schmalen Steg 18 unter dem Füllerkanal 17 hindurch auf einen soliden Teil, den Fuss 19, übertragen werden. Dieser weist eine gebogene Fläche auf, sodass er mit ihr nur an einer Stelle, dem Berührungspunkt 20, an der Halterippe 3 aufliegt. Hebt sich der Zuganker 14 unter Wirkung der erwähnten Kräfte noch mehr von der Halterippe 3 ab als dies beim Normalzustand in der Figur gezeigt ist, hat dies wegen dieser Punktberührung eine leichte Drehbewegung des Fusses 19 zur Folge, weil dieser auf der andern Seite an der Mittelrippe 5 anliegt. Diese Drehbewegung verstärkt den Druck auf den Berührungspunkt 20 und verbessert damit die Verankerung der gesamten Dichtungsprofilleiste.

Der Fuss 19, der zwecks Erhöhung seiner Elastizität eine kreisrunde Aussparung 21 aufweist, die sich deformieren kann, setzt sich über eine kurze und schmale Brücke 22, die Zugspannungen überträgt, in einen ihm ähnlich aussehenden Teil, den Fülleranker 23 fort. Dieser ist so bezeichnet, weil er eine Verankerungsschulter 24 für den noch zu beschreibenden Füller aufweist. Auch der. Fülleranker 23 weist eine gleiche Aussparung 21 wie der Fuss 19 auf. Zudem besitzt er gegen die Aussenseite hin eine Abschrägung 25, die in eine Abstütz- und Dichtlippe 26 übergeht, welche auf dem Rahmen 1 aufliegt. Auf die Wirkung dieser Einzelheiten wird noch zurückgekommen.

In den Füllerkanal 17 ist ein ebenfalls aus elastischem Material bestehender Streifen eingesetzt, der den Kanal ausfüllt und daher als Füller 27 bezeichnet ist. Wesentlich an ihm ist, dass er mehrere Hohlräume 28 aufweist. Diese sind durch dünne Stege 29, die bereits im Normalzustand gebogen sind, voneinander getrennt. Durch diese Hohlräume wird der Füller 27 sehr elastisch, was ihn in Querrichtung, in den Figuren also on oben nach unten, stark komprimierbar macht. Damit ist er in der Lage, sehr grosse Fabrikationstoleranzen aufzunehmen. Er kann daher mit Uebermass gegenüber den Abmessungen des Füllerkanals 17 ausgeführt werden, sodass er auf alle Fälle in diesen eingepresst werden muss und selbst dann noch Druck auf die Flanken des Füllerkanals 17 ausübt, wenn dieser wegen Abweichungen vom Sollmass sehr breit ist oder sich wegen einer zu kleinen Verglasung 2 stark aufweiten kann. Damit ist ein einwandfreier Eingriff der beiden Verzahnungen 15, 16 ineinander in jedem Fall gewährleistet, selbst wenn die Klebehaftung des Dichtungsstreifens 9 an der Verglasung 2 mit der Zeit nachgeben sollte. Der genannte Kompressionsdruck des Füllers 27 bewirkt ausserdem eine Auflage unter Druck des Fusses 19 und des Füllerankers 23 auf den Quersteg 4 und damit eine weitere Verbesserung der Verankerung der Profilleiste im Rahmen 1.

Der Füller 27 trägt an seinem äusseren Ende zwei Lippen. Die eine ist eine Dichtlippe 30, die sich von aussen an die Aussenscheibe 7a anlegt und dort dichtet. Im Gegensatz zum Stand der Technik muss sie die Verglasung nicht festhalten, denn dies besorgen vollumfänglich die ineinandergreifenden Verzahnungen 15, 16. Die andere, ebenfalls dichtende Lippe 31 legt sich gegen die Abschrägung 25 an, wobei sie je nach den Montage- und Herstellungstoleranzen näher bei der Lippe 26 oder weiter von ihr entfernt ist und wegen des Winkels, den die Abschrägung 25 mit ihr bildet, mehr oder weniger weit an der Aussenseite vorsteht. In jedem Fall bildet sich an der Aussenseite eine Gesamtfläche aus, die nur von geringfügigen Vertiefungen unterbrochen ist; entsprechend gering sind denn auch bei hohen Fahrgeschwindigkeiten die Verwirbelungen der Luft und damit der Fahrgeräusche.

Zur Verankerung des Füllers 27 im Füllerkanal 17 trägt der Füller eine Auflagefläche 32, mit der er sich gegen die Verankerungsschulter 24 am Fülleranker 23 anlegt. Ausser dieser Verankerung ergibt sich dadurch noch eine weitere Funktion. Wird nämlich der Zuganker 14 wie erwähnt nach aussen, also nach rechts gezogen, wird der Grund des Füllerkanals 17 angehoben und drückt so den Füller 27 in dieselbe Richtung. Dieser Druck überträgt sich nun aber auf den Fülleranker und somit in den Dichtungskörper 6. Dessen Verankerung im Rahmen 1 wird so weiter verbessert.

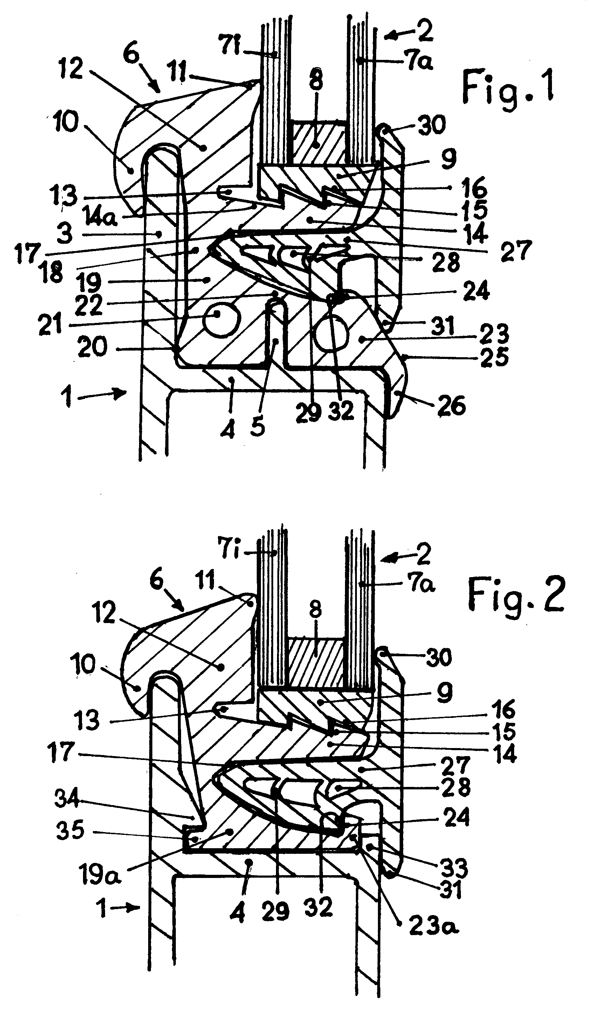

Die Ausführungsform nach Fig. 2 unterscheidet sich nicht wesentlich von derjenigen nach Fig. 1. Hier musste nun aber nicht die Profilleiste einem bereits vorhandenen Rahmen angepasst werden, sondern dieser konnte so abgeändert werden, dass die Profilleiste in Einzelheiten noch weiter verbessert werden konnte, insbesondere im Hinblick auf ihren Materialaufwand und ihre Biegbarkeit um die Ecken der Verglasung herum. Sie weist nun nur noch einen Fuss 19a auf, der wegen des Wegfalls der Mittelrippe 5 in rasch abnehmender Dicke bis zu einem nur noch als annähernd senkrecht von ihm abstehende Rippe ausgebildeten Fülleranker 23a reicht. Der letztere liegt gegen eine Endrippe 33 am Quersteg 4 an. Damit entfällt auch die Lippe 26. Die immer noch vorhandene Verankerungeschulter 24 befindet sich dank geeigneter Wahl der Dicken von Fülleranker 23a und Endrippe 33 an der genau gleichen Stelle wie bei der ersten Ausführungsform. Damit ist es möglich, für beide Ausführungsformen denselben Füller 27 zu verwenden. Der Fuss 19a weist an seinem linken Ende einen Vorsprung 34 auf, der sich unter einen entsprechenden Absatz 35 der Halterippe 3 legt und damit die Verankerung des Fusses 19a verbessert. Zu beachten ist, dass der Fuss 19a wesentlich weniger hoch ist als der Fuss 19; selbst an seiner dicksten Stelle ganz links weist er eine geringere Abmessung als der Fuss 19 auf. Dies führt nun dazu, dass die Lippe 31 des Füllers 27 direkt auf dem Rahmen 1 aufliegt. Damit wird die von aussen sichtbare Breite der Dichtungsprofilleiste nur noch von den beiden Lippen 30, 31 bestimmt. Die Profilleiste wirkt also hier schmäler als bei der ersten Ausführungsform, was den optischen Eindruck nochmals verbessert.

Der niedrigere Fuss 19a und die damit verbundene Reduktion der Gesamthöhe des Querschnittes des Dichtungskörpers 6 hat noch einen weiteren Vorteil. Bekanntlich muss die Dichtungsprofilleiste um die ganze Verglasung herum geführt werden. Hierbei bilden aber deren Ecken stets Probleme. In der Regel werden die beiden Scheiben der Verglasung an diesen Ecken abgerundet. Der Radius der Abrundung ist aber nicht besonders gross, und es erhebt sich die Frage, ob an diesen Ecken besondere Eckstücke vorgesehen werden müssen, die dann mit den entlang den Seiten der Verglasung verlaufenden Abschnitten der Profilleiste verschweisst werden. Dies ist aber sehr aufwendig. Besonders die zweite Ausführungsform hat nun den Vorteil, dass die dargestellte Profilleiste sich um diese Ecken herumbiegen lässt, ohne dass an der Krämmungsinnenseite, d.h. bei der Dichtlippe 11, ein zu grosser Materialstau auftritt, der zu Verwerfungen und damit zu Undichtigkeiten führen würde; andererseits ist die Krümmungsaussenseite, also beim Fuss 19 bzw. 19a, gut dehnbar. Das meiste Material der Profilleiste befindet sich ohnehin im Querschnittsschwerpunkt, also in der bei der Umbiegung neutralen Zone. Somit kann auf besondere Eckstücke verzichtet werden, was die Montage vereinfacht. Auch die Leiste nach der ersten Ausführungsform lässt sich noch umbiegen, wenn auch etwas weniger gut als die nach der zweiten.

## Patentansprüche

1. Dichtungsprofilleiste aus elastischem Material für eine Fensterverglasung in einem Rahmen insbesondere eines Fahrzeuges, mit einem Dichtungskörper (6), der einen Füllerkanal (17), einendarin eingesetzten Füller (27) zur Erzielung eines auf den Rahmen (1) und die Verglasung einwirkenden Dichtdruckes, ferner die Aussenseite des Rahmens (1) sowie den Rand der Verglasung (2) zu übergreifen und solcherarts abzudichten bestimmte Dichtlippen (30, 31) und im weiteren eine Verankerungslippe (10) aufweist, die zur Verankerung der Dichtungsprofilleiste am Rahmen (1) bestimmt ist, dadurch gekennzeichnet, dass der Füller (27) in seinem Inneren mindestens einen sein elastisches Zusammendrücken ermöglichenden Hohlraum (28) aufweist, dass die genannten Dichtlippen (30,31) am Füller (27) selber angebracht sind und dass aus dem Dichtungskörper (6) heraus ein die eine Seite des Füllerkanals (17) begrenzender zungenartiger Lappen (14) absteht, der auf seiner den Füllerkanal (17) nicht begrenzenden Längeseite (14a) eine Verzahnung (15) aufweist, die dazu bestimmt ist, in eine entsprechende Verzahnung (16) an einem um den Rand der Verglasung herum laufenden Dichtungs- und Schutzstreifen einzugreifen.

2. Dichtungeprofilleiste nach Anspruch 1, dadurch gekennzeichnet, dass die die Verzahnung (15) tragende Längsseite (14a) des Lappens (14) an demjenigen Ende, an welchem dieser dem Dichtungskörper entspringt, durch einen Einschnitt (13) im Dichtungskörper (6) verlängert ist.

3. Dichtungsprofilleiste nach Anspruch 2, dadurch gekennzeichnet, dass die andere Seite des Füllerkanals (17) durch einen Fuss (19), einen Fülleranker (23) und eine die beiden (19, 23) verbindende Brücke (22) begrenzt ist, wobei der Fuss (19) mit dem Lappen (14) über einen den Grund des Füllerkanals (17) begrenzenden Steg (18) verbunden ist.

4. Dichtungsprofilleiste nach Anspruch 3, dadurch gekennzeichnet, dass der Fülleranker (23) eine Verankerungsschulter (24) aufweist, gegen die sich der im Füllerkanal (17) eingesetzte Füller (27) mittels einer Auflagefläche (32) zwecks seiner Verankerung anlegt.

5. Dichtungeprofilleiste nach Anspruch 3, dadurch gekennzeichnet, dass der Fülleranker (23) eine Abschrägung (25) aufweist, die zu der auf ihr aufliegenden einen Dichtlippe (31) einen Winkel bildet.

6. Dichtungsprofilleiste nach Anspruch 3, dadurch gekennzeichnet, dass der Fuss (19) eine gebogene Fläche aufweist, die dazu bestimmt ist, mit dem ihn umgebenden Rahmen (1) nur einen Berührungspunkt (20) zu bilden, um welchen der Fuss (19) eine Drehbewegung ausführen kann.

7. Dichtungsprofilleiste nach Anspruch 2, dadurch gekennzeichnet, dass die andere Seite des Füllerkanals (17) über ihre ganze Länge nur durch einen annähernd dreieckförmigen Fuss (19a) begrenzt ist, der an seinem einen Ende einen Fülleranker (23a) in Form einer von ihm annähernd senkrecht abstehenden Rippe trägt.

8. Dichtungsprofilleiste nach Anspruch 7, dadurch gekennzeichnet, dass der Fuss (19a) an seinem andern Ende einen einen Absatz (35) des Rahmens (1) zu untergreifen bestimmten Vorsprung (34) zwecks seiner Verankerung aufweist.
